(19) **Europäisches Patentamt / European Patent Office / Office européen des brevets**

(11) **EP 3 451 555 B1**

(12) **FASCICULE DE BREVET EUROPEEN**

(45) Date de publication et mention
de la délivrance du brevet:
**12.08.2020 Bulletin 2020/33**

(51) Int Cl.:
*H04B 10/116* (2013.01)   *G08C 23/04* (2006.01)

(21) Numéro de dépôt: **18192710.4**

(22) Date de dépôt: **05.09.2018**

(54) **PROCÉDÉ ET DISPOSITIF DE TRANSMISSION OPTIQUE POUR TRANSACTION BANCAIRE**

VERFAHREN UND VORRICHTUNG ZUR OPTISCHEN ÜBERTRAGUNG FÜR
BANKTRANSAKTIONEN

OPTICAL TRANSMISSION METHOD AND DEVICE FOR BANK TRANSACTIONS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.09.2017 FR 1758160**

(43) Date de publication de la demande:
**06.03.2019 Bulletin 2019/10**

(73) Titulaire: **ORANGE**
**75015 Paris (FR)**

(72) Inventeurs:
• **BOUCHET, Olivier**
  **92326 CHATILLON CEDEX (FR)**
• **PERRUFEL, Micheline**
  **92326 CHATILLON CEDEX (FR)**
• **CUTULLIC, Christophe**
  **92326 CHATILLON CEDEX (FR)**
• **DUSSAUME, Philippe**
  **92326 CHATILLON CEDEX (FR)**

(56) Documents cités:
**EP-A1- 2 525 334    US-A1- 2006 056 855
US-B1- 6 501 581**

## Description

La présente invention se rapporte au domaine des transmissions de données via un flux optique.

## Art antérieur

Il est connu de nombreux terminaux de communication utilisés pour des transactions bancaires. Les transactions bancaires peuvent s'effectuer à distance par exemple sur des sites de commerce électronique, elles peuvent s'effectuer en local via un terminal de paiement dédié dit TPE et depuis quelques années elles peuvent s'effectuer via un téléphone mobile.

Lors de ces transactions des technologies variées sont mises en oeuvre : liaison filaire avec lecture d'une carte bancaire et saisie d'un code confidentiel, liaison radio très courte distance de type NFC (Near Field Communication), etc.

Beaucoup de clients sont réticents à un paiement via une transmission radio très courte distance de type NFC car ils doutent de la sécurité associée à ce type de transmission. En outre, certains clients luttent contre le déploiement de systèmes utilisant des ondes radio pour des raisons de sensibilité à ces ondes.

US6501581 B1 divulgue un adaptateur incluant un guide de lumière pour guider la lumière entre le port de lumière d'un smartphone et le port de lumière d'un PC.

Les terminaux TPE sont très répandus et généralement reconnus comme sûres par les clients mais ils ont un coût parfois considéré comme prohibitif par le marchand.

## Caractéristiques principales de l'invention

La présente invention propose une architecture à faible coût pour assurer une transaction bancaire en local en toute sécurité via une transmission optique.

A cette fin, l'invention a pour objet un procédé de transmission de données entre deux terminaux de télécommunication dont au moins un de type mobile via un canal optique entre les émetteurs et récepteurs optiques des deux terminaux, comprenant :

- le couplage optique d'uniquement les deux terminaux de télécommunication entre eux au moyen d'un tunnel optique et de deux surfaces de contact, une des surface étant destinée à accueillir le au moins un terminal de télécommunication mobile et à assurer le couplage optique entre le tunnel optique et d'une part l'émetteur optique et d'autre part le récepteur optique de ce terminal et l'autre surface étant destinée à assurer le couplage optique entre le tunnel optique et d'une part l'émetteur optique et d'autre part le récepteur optique de l'autre terminal de télécommunication.

Selon un mode de réalisation, l'émetteur et le récepteur optiques du au moins un terminal mobile de télécommunication sont respectivement une diode électroluminescente et une caméra.

L'invention a en outre pour objet un dispositif de couplage optique entre deux terminaux de télécommunication dont au moins un de type mobile, chacun des deux terminaux étant équipés d'un émetteur et d'un récepteur optiques, le dispositif comprenant :

- un tunnel optique,
- une première surface de contact destinée à accueillir le au moins un terminal de télécommunication mobile et à assurer le couplage optique entre le tunnel optique et d'une part l'émetteur optique et d'autre part le récepteur optique de ce terminal,
- une deuxième surface de contact destinée à assurer le couplage optique entre le tunnel optique et d'une part l'émetteur optique et d'autre part le récepteur optique de l'autre terminal de télécommunication.

Le tunnel optique est selon un mode de réalisation un conduit avec une surface interne réfléchissante pour assurer la transmission optique du signal entre la première surface et la deuxième surface de contact.

Selon un mode de réalisation du dispositif de couplage, la deuxième surface de contact est destinée à être posée sur cet autre terminal de télécommunication.

Selon un mode de réalisation du dispositif de couplage, la deuxième surface de contact est destinée à accueillir cet autre terminal de télécommunication.

Selon un mode de réalisation du dispositif de couplage, le tunnel optique comprend un faisceau de fibres optiques brassées entre la première surface de contact et la deuxième surface de contact.

Selon un mode de réalisation du dispositif de couplage, le tunnel optique comprend un convertisseur optique/électrique et un convertisseur électrique/optique.

Le tunnel optique assure le couplage optique sans génération de flux électromagnétique dédié et sans aucune consommation électrique. L'invention permet ainsi un couplage très simple et peu couteux entre une source optique d'un premier terminal optique de télécommunication et le récepteur optique d'un second terminal optique de télécommunication.

Les terminaux sont chacun équipés d'une source et d'un récepteur optiques. Le couplage optique est donc bidirectionnel dans un mode de communication pair-à-pair (peer to peer) entre les deux terminaux.

Au moins un des deux terminaux est un terminal mobile qui appartient généralement au client. Le second terminal peut aussi bien être de type mobile que de type fixe, il appartient généralement au marchand dans un contexte de transaction bancaire.

La longueur d'onde du flux optique peut appartenir au domaine visible ce qui permet aussi bien au client qu'au marchand de constater l'absence de diffusion du flux optique à l'extérieur du dispositif de couplage et ainsi de les rassurer sur la sécurité de la transmission entre les deux terminaux.

Le dispositif de couplage canalise le flux optique dans le tunnel optique. Le dispositif de couplage permet d'établir une communication optique avec un support permettant le blocage physique de toute diffusion des flux optiques émis et reçus par la source et le récepteur optiques (par exemple caméra et LED d'un smartphone, d'une tablette ou d'un laptop) vers l'extérieur. L'invention propose ainsi une solution simple pour transmettre des données entre les deux terminaux en réalisant une communication optique bilatérale sans fil sécurisée.

Le procédé peut être utilisé pour réaliser une transaction financière entre les porteurs identifiés des terminaux de télécommunication respectifs.

L'invention apporte donc une alternative simple et peu onéreuse aux transactions via un terminal de paiement bancaire classique.

## Liste des figures

D'autres caractéristiques et avantages de l'invention apparaîtront lors de la description qui suit faite en regard des figures annexées données à titre d'exemple non limitatif.

Les figures 1a et 1b sont des schémas d'un premier mode de réalisation d'un dispositif de couplage selon l'invention entre un smartphone et une tablette.

Les figures 2a et 2b sont des schémas d'un deuxième mode de réalisation d'un dispositif de couplage selon l'invention entre un smartphone et une tablette.

La figure 3 est un schéma d'un mode de réalisation d'un dispositif de couplage avec brassage de fibres optiques permettant de modifier la linéarité de la transmission du flux optique.

## Description de modes de réalisation particuliers de l'invention

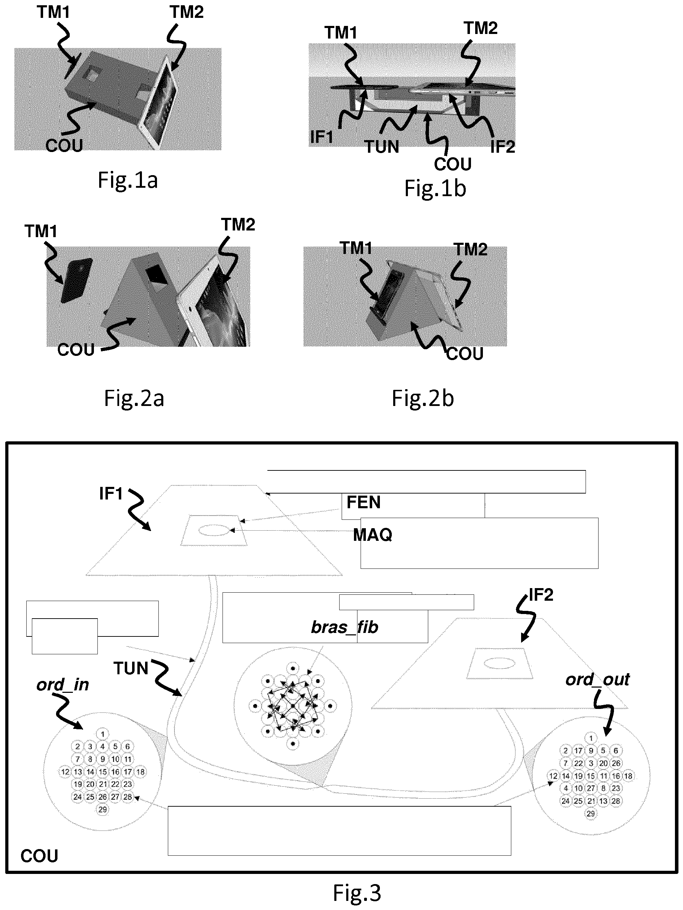

Les figures 1a et 1b sont des schémas d'un premier mode de réalisation d'un dispositif de couplage selon l'invention entre deux terminaux de télécommunication mobiles, un smartphone et une tablette.

En référence aux figures 1a et 1b, le dispositif de couplage COU entre un smartphone TM1 et une tablette TM2 comprend un tunnel optique TUN, une première surface de contact IF1 et une deuxième surface de contact IF2.

La première surface de contact IF1 est destinée à accueillir le smartphone TM1. D'une part elle assure le couplage optique entre le tunnel optique TUN et l'émetteur optique du smartphone TM1 et d'autre part elle assure le couplage optique entre le tunnel optique TUN et le récepteur optique de ce smartphone TM1.

La deuxième surface de contact IF2 est destinée à accueillir la tablette TM2. D'une part elle assure le couplage optique entre le tunnel optique TUN et l'émetteur optique de la tablette TM2 et d'autre part elle assure le couplage optique entre le tunnel optique TUN et le récepteur optique de cette tablette TM2.

L'émetteur optique du smartphone TM1 est par exemple une LED et son récepteur optique une caméra CCD (acronymes des termes anglosaxons Charge Coupled Device). La tablette est par exemple équipée de manière similaire avec une LED et une caméra CCD.

Une caméra CCD assure la conversion d'un signal lumineux en un signal électrique. Une telle caméra comprend une matrice CCD formée de lignes et de colonnes définissant des pixels dont chacun correspond à un élément semi-conducteur pris en étau dans un condensateur électrique. Le principe de lecture d'une matrice CCD conduit à définir les bornes des colonnes par un dopage p gravé dans le silicium. En revanche, les bornes des lignes sont définies par une polarisation commandée. Le puits de potentiel qu'est un pixel est statique dans la phase d'acquisition du signal scientifique puis variable pendant la lecture des pixels.

En fonctionnement, un photon incident (flux reçu) crée un photo-électron lorsqu'il apporte à un électron du matériau semi-conducteur l'énergie nécessaire pour franchir le seuil énergétique (gap). Les photo-électrons sont stockés dans le puits de potentiel qu'est le pixel convenablement polarisé. La lecture de ces photo-électrons est commandée par polarisation via des transistors à effet de champ. Elle a lieu soit directement, un obturateur cachant la source, soit par transfert de trame. Dans ce dernier cas, une moitié de la surface de la matrice CCD est réservée à la collecte du signal ; l'autre moitié n'est jamais éclairée mais recueille les photo-électrons de la partie réceptrice avant la lecture complète et le transfert des charges vers l'étage d'amplification.

Une diode électroluminescente LED (acronymes des termes anglosaxons Light-Emitting Diode) est un dispositif opto-électronique capable d'émettre de la lumière (flux émis) lorsqu'il est parcouru par un courant électrique. Une LED ne laisse passer le courant électrique que dans un seul sens (le sens passant, comme une diode classique, l'inverse étant le sens bloquant) et produit un rayonnement monochromatique ou polychromatique non cohérent à partir de la conversion d'énergie électrique lorsqu'un courant la traverse. Il est connu une application logicielle pour piloter la LED et générer des Flash. Il est en outre connu des applications logicielles pour générer un flux lumineux et se servir du smartphone comme d'une lampe.

Selon le mode illustré, le dispositif de couplage a une forme parallélipédique.

Les figures 2a et 2b sont des schémas d'un deuxième mode de réalisation d'un dispositif de couplage selon l'invention entre un smartphone et une tablette. Selon le mode illustré, le dispositif de couplage a une forme trapézoïdale.

Selon un mode de réalisation particulier, le tunnel optique comprend une surface interne sous forme d'une couche spéciale limitant les réflexions (par exemple une structure absorbante ou un réseau de Bragg). Une réflexion se produit lorsque l'onde (lumineuse) rencontre une surface dont les dimensions sont grandes par rapport à la longueur d'onde. Les caractéristiques de réflexion d'une surface quelconque dépendent de plusieurs facteurs :

- la surface du matériau (lisse ou rugueux) ;
- la longueur d'onde du rayonnement incident ;
- l'angle d'incidence.

La rugosité de la surface d'une structure comparativement à la longueur d'onde du signal incident constitue un paramètre important de la forme du diagramme de réflexion. Une surface lisse réfléchit le rayonnement incident dans une seule direction tel un miroir et la loi de Descartes est appliquée, la réflexion est appelée réflexion spéculaire. A la différence d'un canal de radio pour lequel les réflexions sur les surfaces sont majoritairement du type spéculaire, les réflexions dominantes dans le domaine de l'optique sont du type diffus.

Dans le cas d'une surface rugueuse, le rayonnement incident est réfléchi dans toutes les directions. Une surface est considérée comme rugueuse, selon le critère de Rayleigh, si la relation suivante est satisfaite :

$$\varsigma > \frac{\lambda}{8 \sin \theta_i}$$

où :

- $\varsigma$ est la hauteur maximale des irrégularités de la surface ;
- $\lambda$ est la longueur d'onde du rayonnement incident ;
- $\theta_i$ est l'angle d'incidence.

Pour un rayonnement optique de longueur d'onde 1 550 nm, 850 nm ou 550 nm sous incidence normale, une surface est dite rugueuse si la hauteur maximale des irrégularités $\varsigma$ est supérieure respectivement à 0,19 $\mu$m, 0,11 $\mu$m ou 0,07 $\mu$m.

Ces valeurs indiquent que la plupart des surfaces rencontrées à l'intérieur des bâtiments doivent être considérées comme rugueuses au rayonnement optique. Dans ce cas, le diagramme de réflexion présente une composante diffuse importante, l'onde réfléchie est diffusée dans de multiples directions. Cette réflexion est appelée réflexion diffuse.

Afin d'intégrer ce paramètre, deux modèles sont couramment utilisés pour représenter la réflexion du rayonnement optique : le modèle de Lambert et le modèle de Phong.

La plupart des surfaces sont très irrégulières et réfléchissent le rayonnement optique dans toutes les directions, et ceci indépendamment du rayonnement incident. De telles surfaces sont dites diffuses et peuvent être représentées par le modèle de Lambert. Ce modèle est simple et facile à implémenter dans le cadre d'un développement logiciel et il est décrit par l'équation suivante :

$$R(\theta_0) = \rho R_i \frac{1}{\pi} \cos(\theta_0)$$

où :

- $\rho$ est le coefficient de réflexion de la surface ;
- $R_i$ est la puissance optique incidente ;
- $\theta_0$ est l'angle d'observation.

Le tableau en Annexe A donne un exemple de valeurs de coefficients de réflexion d'un faisceau infrarouge provenant de la surface de différents matériaux.

La surface interne du tunnel optique peut ainsi être composée d'un matériau plastique.

Selon un mode de réalisation particulier, un convertisseur optique/électrique et un convertisseur électrique/optique sont insérés dans le tunnel optique. Ils augmentent potentiellement la capacité de données binaire par unité de temps de manière équivalente à un QR code Optique.

La figure 3 est un schéma d'un mode de réalisation d'un dispositif COU de couplage avec brassage de fibres optiques *bras_fib.* Selon ce mode, le tunnel optique TUN comprend un faisceau de fibres optiques brassées entre la première surface de contact IF1 et la deuxième surface de contact IF2. Le brassage transforme l'ordonnancement *ord_in* des fibres selon une matrice d'entrée avant brassage en un autre ordonnancement *ord_out* selon une matrice de sortie. La modification de l'ordonnancement par croisement des fibres dans le tunnel optique modifie la linéarité de la transmission du flux optique entre les deux surfaces de contact et permet une distribution de la puissance optique de manière équi-répartie.

La première surface de contact IF1 comprend un support pour accueillir le smartphone. Ce support, par exemple en plastique, comprend une fenêtre FEN transparente au-dessus du tunnel optique. La surface comprend des repères MAQ pour positionner le smartphone de façon à ce que la LED et la caméra CCD soient en regard de la fenêtre. La deuxième surface de contact IF2 comprend un support pour accueillir la tablette. Ce support comprend une fenêtre transparente au-dessus du tunnel optique. La surface comprend des repères pour positionner la tablette de façon à ce que la LED et la caméra CCD soient en regard de la fenêtre.

Selon un mode de réalisation particulier, le pouvoir de concentration optique est augmenté avec l'ajout dans le tunnel optique d'une demi-sphère ou d'un réseau de micro lentilles.

Lorsque le détenteur du smartphone TM1 veut effectuer un paiement bancaire par exemple dans une boutique équipée du dispositif de couplage COU, il active une application de paiement bancaire sur son smartphone. Cette application l'invite éventuellement à saisir un identifiant et un code confidentiel. Le détenteur dispose son smartphone sur le dispositif de couplage. Le marchand active son application de paiement bancaire associée à la tablette et au dispositif de couplage pour établir la communication avec le smartphone via le dispositif de couplage.

Côté marchand, l'application bancaire émet les données vers le smartphone en pilotant la LED de la tablette et reçoit les données émises par le smartphone en pilotant la caméra CCD de la tablette. L'application bancaire hébergée sur le smartphone pilote la caméra CCD et la LED du smartphone pour établir la communication avec la tablette en émettant des données vers la tablette et en recevant des données émises par la tablette.

Annexe A

| Matériau | Coefficient de réflexion |
|---|---|
| Peinture | 0,184 |
| Papier peint | 0,184 |
| Plancher en bois | 0,128 |
| Etagère bois marron | 0,0884 |
| Verre transparent | 0,0625 |
| Céramique blanche | 0,0517 |
| Plastique | 0,1018 |

**Revendications**

1. Procédé de transmission de données entre deux terminaux (TM1, TM2) de télécommunication dont au moins un de type mobile via la transmission d'un flux optique entre les émetteurs et récepteurs optiques des deux terminaux, comprenant :

   - un couplage optique d'uniquement les deux terminaux de télécommunication entre eux au moyen d'un conduit (TUN) ayant une première surface de contact et une deuxième surface de contact,
   - une canalisation du flux optique par le conduit entre la première surface de contact et la deuxième surface de contact,

   **caractérisé en ce qu'**il comprend en outre :

   - une modification de la linéarité de la transmission du flux optique entre les deux surfaces de contact au moyen de fibres optiques brassées comprises dans le conduit.

2. Procédé selon la revendication 1, selon lequel l'émetteur et le récepteur optiques du au moins un terminal mobile (TM1) de télécommunication sont respectivement une diode électroluminescente et une caméra.

3. Dispositif (COU) de couplage optique entre deux terminaux de télécommunication dont au moins un (TM1) de type mobile équipés chacun d'un émetteur et d'un récepteur optiques, comprenant :

   - un conduit (TUN) comprenant une première surface de contact et une deuxième surface de contact,
   - la première surface (IF1) de contact étant destinée à accueillir le au moins un terminal de télécommunication mobile et à assurer le couplage optique entre le conduit et d'une part l'émetteur optique et d'autre part le récepteur optique de ce terminal,
   - la deuxième surface (IF2) de contact étant destinée à assurer le couplage optique entre le conduit et d'une part l'émetteur optique et d'autre part le récepteur optique de l'autre terminal de télécommunication

   **caractérisé en ce que** le conduit (TUN) comprend un faisceau de fibres optiques brassées entre la première surface de contact et la deuxième surface de contact.

4. Dispositif (COU) de couplage optique selon la revendication précédente dans lequel la deuxième surface de contact est destinée à être posée sur cet autre terminal de télécommunication.

5. Dispositif (COU) de couplage optique selon la revendication 3 dans lequel la deuxième surface de contact est destinée à accueillir cet autre terminal de télécommunication.

6. Dispositif (COU) de couplage optique selon l'une des revendications 3 à 5 dans lequel le conduit comprend sur sa surface interne un traitement de surface limiteur de réflexions.

7. Utilisation d'un procédé selon l'une des revendications 1-2 pour réaliser une transaction financière entre les porteurs identifiés des terminaux de télécommunication respectifs.

**Patentansprüche**

1. Verfahren zur Datenübertragung zwischen zwei Telekommunikationsendgeräten (TM1, TM2), von denen wenigstens eines ein mobiles Endgerät ist, durch die Übertragung eines optischen Flusses zwischen den optischen Sendern und Empfängern der zwei Endgeräte, umfassend:

- eine optische Kopplung ausschließlich der zwei Telekommunikationsendgeräte miteinander mittels einer Leitung (TUN), die eine erste Kontaktfläche und eine zweite Kontaktfläche aufweist,
- eine Kanalisierung des optischen Flusses durch die Leitung zwischen der ersten Kontaktfläche und der zweiten Kontaktfläche,

**dadurch gekennzeichnet, dass** es außerdem umfasst:

- eine Modifikation der Linearität der Übertragung des optischen Flusses zwischen den zwei Kontaktflächen mittels umgeordneter Lichtwellenleiter, die in der Leitung enthalten sind.

2. Verfahren nach Anspruch 1, wobei der optische Sender und der optische Empfänger des wenigstens einen mobilen Telekommunikationsendgerätes (TM1) eine Leuchtdiode bzw. eine Kamera sind.

3. Vorrichtung (COU) zur optischen Kopplung zwischen zwei Telekommunikationsendgeräten, von denen wenigstens eines (TM1) ein mobiles Endgerät ist und die jeweils mit einem optischen Sender und einem optischen Empfänger ausgestattet sind, umfassend:

- eine Leitung (TUN), die eine erste Kontaktfläche und eine zweite Kontaktfläche aufweist,
- wobei die erste Kontaktfläche (IF1) dazu bestimmt ist, das wenigstens eine mobile Telekommunikationsendgerät aufzunehmen und die optische Kopplung zwischen der Leitung und einerseits dem optischen Sender und andererseits dem optischen Empfänger dieses Endgerätes sicherzustellen,
- wobei die zweite Kontaktfläche (IF2) dazu bestimmt ist, die optische Kopplung zwischen der Leitung und einerseits dem optischen Sender und andererseits dem optischen Empfänger des anderen Telekommunikationsendgerätes sicherzustellen,

**dadurch gekennzeichnet, dass** die Leitung (TUN) ein Bündel von umgeordneten Lichtwellenleitern zwischen der ersten Kontaktfläche und der zweiten Kontaktfläche umfasst.

4. Vorrichtung (COU) zur optischen Kopplung nach dem vorhergehenden Anspruch, wobei die zweite Kontaktfläche dazu bestimmt ist, an dieses andere Telekommunikationsendgerät angelegt zu werden.

5. Vorrichtung (COU) zur optischen Kopplung nach Anspruch 3, wobei die zweite Kontaktfläche dazu bestimmt ist, dieses andere Telekommunikationsendgerät aufzunehmen.

6. Vorrichtung (COU) zur optischen Kopplung nach einem der Ansprüche 3 bis 5, wobei die Leitung auf ihrer Innenfläche eine reflexionsdämpfende Oberflächenbehandlung aufweist.

7. Anwendung eines Verfahrens nach einem der Ansprüche 1-2 zur Durchführung einer Finanztransaktion zwischen den identifizierten Trägern der jeweiligen Telekommunikationsendgeräte.


**Claims**

1. Method for transmitting data between two telecommunication terminals (TM1, TM2) including at least one of mobile type, via transmission of an optical flux between the optical transmitters and receivers of the two terminals, comprising:

- optically coupling just the two telecommunication terminals to each other by means of a tunnel (TUN) having a first contact surface and a second contact surface,
- channeling the optical flux through the tunnel between the first contact surface and the second contact surface,

**characterized in that** it furthermore comprises:

- modifying the linearity of the transmission of the optical flux between the two contact surfaces by means of mixed optical fibres comprised in the tunnel.

2. Method according to Claim 1, wherein the optical transmitter and receiver of the at least one mobile telecommunication terminal (TM1) are a light-emitting diode and a camera, respectively.

3. Optical device (COU) for coupling two telecommunication terminals including at least one terminal (TM1) of mobile type, each terminal being provided with an optical transmitter and an optical receiver, comprising:

- a tunnel (TUN) comprising a first contact surface and second contact surface,
- the first contact surface (IF1) being intended to accommodate the at least one mobile telecommunication terminal and to ensure the optical coupling between the tunnel and on the one hand the optical transmitter and on the other hand the optical receiver of this terminal,
- the second contact surface (IF2) being intended to ensure the optical coupling between the tunnel and on the one hand the optical transmitter and on the other hand the optical receiver of the other telecommunication terminal,

**characterized in that** the tunnel (TUN) comprises a bundle of mixed optical fibres between the first contact surface and the second contact surface.

4. Optical coupling device (COU) according to the preceding claim, wherein the second contact surface is intended to be placed on this other telecommunication terminal.

5. Optical coupling device (COU) according to Claim 3, wherein the second contact surface is intended to accommodate this other telecommunication terminal.

6. Optical coupling device (COU) according to one of Claims 3 to 5, wherein the tunnel comprises a reflection-limiting surface treatment on its inner surface.

7. Use of a method according to one of Claims 1-2 to perform a financial transaction between the identified bearers of the respective telecommunication terminals.

TM1        TM2

COU

Fig.1a

TM1        TM2

IF1    TUN    IF2
        COU

Fig.1b

TM1        TM2

COU

Fig.2a

TM1        TM2

COU

Fig.2b

IF1

FEN

MAQ

IF2

bras_fib

ord_in

TUN

| | | | | | |
|---|---|---|---|---|---|
| | | 1 | | | |
| 2 | 3 | 4 | 5 | 6 | |
| 7 | 8 | 9 | 10 | 11 | |
| 12 | 13 | 14 | 15 | 16 | 17 | 18 |
| 19 | 20 | 21 | 22 | 23 | |
| 24 | 25 | 26 | 27 | 28 | |
| | | 29 | | | |

ord_out

| | | | | | |
|---|---|---|---|---|---|
| | | 1 | | | |
| 2 | 17 | 9 | 5 | 6 | |
| 7 | 22 | 3 | 20 | 26 | |
| 12 | 14 | 19 | 15 | 11 | 16 | 18 |
| 4 | 10 | 27 | 8 | 23 | |
| 24 | 25 | 21 | 13 | 28 | |
| | | 29 | | | |

COU

Fig.3

**RÉFÉRENCES CITÉES DANS LA DESCRIPTION**

**Documents brevets cités dans la description**

- US 6501581 B1